# EUROPEAN PATENT SPECIFICATION

(11) **EP 3 844 253 B1**
(45) Date of publication and mention of the grant of the patent: **25.03.2026**
(21) Application number: 19786681.7
(22) Date of filing: 22.08.2019
(51) Int. Cl.: C11B 3/00, C11B 3/10, C11B 3/12, C11B 3/14

(54) **THE METHOD OF PRODUCTION OF REFINED EDIBLE OIL WITH LOW CONTENT OF UNDESIRABLE 3-MPCD, 2-MPCD AND GLYCIDES**
VERFAHREN ZUR HERSTELLUNG VON RAFFINIERTEM SPEISEÖL MIT NIEDRIGEM GEHALT AN UNERWÜNSCHTEN 3-MPCD, 2-MPCD UND GLYCIDEN
PROCÉDÉ DE PRODUCTION D'HUILE COMESTIBLE RAFFINÉE AYANT UNE FAIBLE TENEUR EN 3-MPCD, 2-MPCD ET GLYCIDES INDÉSIRABLES

(30) Priority: 27.08.2018 PL 42681818
(43) Date of publication of application: 07.07.2021
(73) Proprietor: Komagra Spólka Z O.O., 01-303 Warszawa (PL)
(72) Inventor: SAWICKI, Grzegorz, PL-43-100 Tychy (PL); SUSIK, Justyna, PL-43-100 Tychy (PL); BURY, Maciej, PL-32-620 Brzeszce (PL)
(74) Representative: Karczmitowicz, Teresa Ewa
(86) International application number: PCT/PL2019/000071
(87) International publication number: WO 2020/046152

(56) References cited:
- WO-A1-2011/069028
- WO-A1-2017/035403
- AU-B2- 2013 202 440
- WEI-WEI CHENG ET AL: "Glycidyl Fatty Acid Esters in Refined Edible Oils: A Review on Formation, Occurrence, Analysis, and Elimination Methods", COMPREHENSIVE REVIEWS IN FOOD SCIENCE AND FOOD SAFETY, vol. 16, no. 2, 30 January 2017 (2017-01-30), US, pages 263 - 281, XP055648308, ISSN: 1541-4337, DOI: 10.1111/1541-4337.12251
- MUSFIRAH ZULKURNAIN ET AL: "The effects of physical refining on the formation of 3-monochloropropane-1,2-diol esters in relation to palm oil minor components", FOOD CHEMISTRY, ELSEVIER LTD, NL, vol. 135, no. 2, 30 April 2012 (2012-04-30), pages 799 - 805, XP028427206, ISSN: 0308-8146, [retrieved on 20120511], DOI: 10.1016/J.FOODCHEM.2012.04.144

## Description

The subject of the invention is the method of producing refined edible oil, especially rapeseed and sunflower oil, with low content of undesirable chemical compounds such as: 3-monochloropropane-1,2-diol, 2-monochloropane-1,3-diol, glycidol and their esters with free fatty acids contained in food oils for food and cosmetic industry applications The scope of the invention is defined by the claims.

Technological processes, especially those involving high-temperature thermal processing, may lead to the formation of undesirable chemical compounds in food. As regards fats and products obtained with their participation, these are both trans-fatty acids isomers and numerous fat degradation products produced especially during frying, including acrylamide. In recent years, special attention has been paid to a new group of compounds - fatty acid esters and 3-monochloropropane-1,2-diol (3-MCPD) and accompanying glycidyl esters (GE), which were found in various types of refined fats and products obtained with their participation. In appropriate conditions their deesterification and release of free 3-MCPD and glycidol, which, due to their toxic properties, are undesirable compounds in food, may occur.

The main product exposed to contamination with these compounds is vegetable oil already at the stage of the technological process of obtaining and refining, and further it is chips, crisps, bread, etc. The International Agency for Research on Cancer (IARC) classifies free 3-MCPD and glycidol respectively as 'possibly carcinogenic - Group 2B' and 'probably carcinogenic - Group 2A'. Many studies have been conducted and it has been found that the formation of the above mentioned compounds and their derivatives is caused by the parameters of processes in the production technologies used, especially high temperature.

The hitherto applied technologies of refined vegetable oil production consist of the following stages: (1) hot/cold pressing of seeds, (2) solvent extraction of oil, (3) degummining of crude oil, (4) neutralization, (5) bleaching and (6) deodorization. Glycidyl esters, treated as precursors of 3-MPCD esters, are formed during refining - especially during deodorisation. Deodorizing is the last stage of the refining process to remove substances from oils which give an unpleasant taste and smell, free fatty acids (physical refining) and heat-sensitive dyes. Apart from technological differences related to the use of different equipment and different conditions of conducting the refining process, however, so far the oils which have been hydrated (degummed), neutralised or not neutralised have been subjected to bleaching and then deodorising processes, which are carried out under conditions of deep vacuum and high temperature >200°C, in order to obtain a product which meets the standards of taste, smell, colour, peroxide number and acid number. Oils produced in this way may contain elevated amounts of 3-MPCD, 2-MPCD and their derivatives, as well as glycidol, due to the use of high deodorizing temperature.

The German application No. DE102008060059 (A1) titled: "Process of reducing the content of 3-MCPD in refined vegetable oils" reveals the method of oil refining, in which crude vegetable oil is first subjected to the process of degumming and then bleached by mixing with bleaching earth, then the earth is separated by filtration and then the filtered oil is subjected to the process of deodorizing in the next stage. During the degumming process, less than 15% by weight of water is added to the raw oil and the process is carried out without the addition of acid at a temperature below 70 °C, preferably within a temperature range of 40 to 50 °C, whereafter the degummed oil is then separated from the water phase, heated to a temperature of 80 to 100°C and HPBE (High Performance Bleaching Earth) class bleaching earth is added to the heated degummed oil in a quantity greater than 1.5% by weight activated with inorganic or organic acid, with the following parameters: specific surface area greater than 175 m2/g. a pore volume greater than 0,2 ml/g, with an ion exchange capacity greater than 15 milliequivalents/100 g; the bleaching process must be carried out at a temperature between 80 and 100 °C.

The US Application No. US2016227809 (A1)**,** titled: "Limitation of the content of 2-MCPD, 3-MCPD, their esters and glycidol esters in vegetable oil" revealed a way of reducing the content of these compounds in several stages: (1) subjecting the vegetable oil to one or more refining processes; (2) subjecting the refined product from stage (1) to vacuum distillation at 200 °C to 280 °C, preferably from 220 °C to 270 °C and pressure from 0,0001 to 3,0 mbar, preferably from 0,002 to 2,5 mbar, wherein vacuum distillation is molecular distillation.

The subsequent application for Chinese invention No. CN104694250 (A) describes a method for reducing the content of 3-MCPD esters and/or glycidol esters in oil which ensures an effective reduction of the content of 3-MCPD ester and/or glycidyl ester in oil. The method of oil processing according to the invention cited above consists in the application of an antioxidant, which is a natural antioxidant from the tocopherols group in the amount from 0.5 to 10% by weight, preferably from 5 to 85 % by weight, and includes the following stages: (1) adding one or more antioxidants to the oil after bleaching (decolourisation) or before deodorisation of the oil, followed by (2) deodorisation. Deodorizing is carried out as follows: gas nitrogen or high temperature steam is used as a deodorizing medium, the vacuum degree is no higher than 25 mbar and the deodorizing is carried out at a temperature of 235 to 260°C for 40 to 90 minutes. By using invention methods, it is possible to obtain an oil with a low content of undesirable toxic chemicals below 0.5 ppm.and the proper oil composition.

The European application No. EP3154374 (A1) titled: "The palm oil refining process" reveals a palm oil refining process that produces a product with an exceptionally low content of fatty acid esters and 3-MCPD. This process involves the following steps: (a) removal of phospholipids and/or free fatty acids from crude palm oil by pre-treatment of the palm oil product resulting in palm oil having a reduced phospholipid and/or free fatty acid content; (b) simultaneous or successive contact with bleaching earth and porous silica material in an amount of 1 to 10 % by weight relative to the oil, with a porous material to bleaching earth ratio of 2:1 to 1:20, to produce the bleached product (decolored). The listed silica material with a surface area of at least 10 m2 /g and selected from a group consisting of silica, amorphous silicate, zeolite and their combinations and (c) deodorisation at a temperature of not more than 240°C of the bleached product with silica material at a temperature of at least 95°C preferably in the range of 110 to 150°C, and the bleached palm oil is deodorised at a temperature of not more than °C.

As indicated above, in particular with regard to edible oils subject to refining, the bleaching and deodorisation process parameters play a key role. One of process effects is "thermal bleaching", the purpose of which is the thermal decomposition of carotenes. It is known that thermal degradation of carotene is a very slow process at a temperature of about 200°C, while at temperatures above 260°C it takes only a few minutes. For this reason, deodorizing of oil is most often carried out at high temperatures, which shorten the process time. Numerous studies show a correlation between the process temperature and the number of esters produced, and also indicate that their content may increase exponentially with increasing the duration of the process and increasing the deodorization temperature.

The invention No.AU2013202440 concerns a GLYCIDYL ESTER REDUCTION IN OIL-composition comprising at least one of a rebleached, steam distilled palm oil, a physically refined palm oil, a palm olein, or a physically refined palm olein, the oil comprising: a. a level of glycidyl esters below 0.2 ppm as determined by the liquid chromatography time-of flight mass spectroscopy method; b. a Lovibond red color value no greater than 3.0; and, 10 c. less than 0.1% free fatty acids.

For example, one non-limiting aspect of the present disclosure is directed to a method of removing glycidyl esters from oil, wherein the method includes contacting the oil with an adsorbent, and subsequently steam refining the oil. In certain non-limiting embodiments of the method, steam refining the oil includes at least one of deodorization and physical refining. Also, in certain non-limiting embodiments of the method the adsorbent comprises at least one material selected from magnesium silicate, silica gel, and bleaching clay. An additional non-limiting aspect of the present disclosure is directed to a method of removing glycidyl esters from oil, wherein the method includes contacting the oil with an enzyme, and subsequently steam distilling the oil. In certain embodiments of the method, contacting the oil with an enzyme includes at least one reaction selected from hydrolysis, esterification, transesterification, acidolysis, interesterification, and alcoholysis. Another aspect of the present disclosure is directed to a method of removing glycidyl esters from oil, wherein the method includes deodorizing the oil with at least one sparge selected from ethanol sparge, carbon dioxide sparge, and nitrogen sparge, etc

The article "Glycidyl fatty acid esters in refined edible oils: a review on formation, occurrence, analysis, and elimination methods" - W Cheng, G Liu, L Wang, Z Liu - Comprehensive Reviews in ..., 2017, the authors indicate, that the glycidyl fatty acid esters (GEs) , as one of the main contaminants in processed oils, are mainly formed during the deodorization step in the refining process of edible oils and therefore occur in almost all refined edible oils. GEs are potential carcinogens, due to the fact that they readily hydrolyze into the free form glycidol in the gastrointestinal tract, which has been found to induce tumors in various human tissues. The authors emphasize that glycidol has already been identified as a "possible human carcinogen" therefore, the aim of this review is to provide a comprehensive summary on the following topics: (i) GE occurrence data for different edible oils and oil-based food products, (ii) precursors of GEs, (iii) factors influencing the formation of GEs, (iv) potential reaction mechanisms involving the leaving group and reaction intermediates, and (v) analytical methods, including the indirect and direct methods. More importantly, the various elimination methods for GEs in refined edible oils are being reviewed with focus on 3 aspects: (i) inhibition and removal of reactants, (ii) modification of reactive conditions, and (iii) elimination of GE products.

The invention WO 2012107230 A1 reveals a process for the production of a refined oil having a reduced 3-MCPD ester and glycidyl ester content, that comprises subjecting an oil to the following steps, in order: (a) a bleaching step, (b) a deodorization step, (c) a final bleaching step, and (d) a final deodorization step, wherein final deodorization step (d) is carried out at a temperature at least 40°C lower than deodorization step (b), and wherein the final deodorization step (d) is carried out at a temperature in the range of 130°C - 160°C and the steps (b) to (d) comprise: i) introducing an oil into a deodorization apparatus, ii) removing the oil from the deodorization apparatus via an oil outlet positioned such that the oil leaves the deodorization apparatus after an initial deodorization; iii) subjecting the oil to a bleaching step; iv) reintroducing the oil to the deodorization apparatus via an oil inlet positioned such that the oil enters the deodorization apparatus and is subjected to a further deodorization at a temperature at least 40°C lower than the initial deodorization. A process according to WO101207230 , the further comprises at least one alkali treatment step selected from an alkali refining step and an alkali interesterification step and an alkali refining step carried out prior to bleaching step (a) and/or an alkali interesterification step carried out between deodorization step (b) and final bleaching step (c).

In view of the above, an inventive problem was formulated, according to which the aim of the invention is to conduct the process of production of refined edible oil, especially the process of bleaching and deodorizing by changing process parameters, especially by lowering the maximum temperature and significantly reducing the "heat load". This goal was achieved by refining oil with multistage bleaching and deodorization process in conditions of continuous monitoring of process parameters, thus enabling to obtain a final product with essentially insignificant (below the limit of quantification of currently used test methods) content of undesirable chemical compounds, such as: 3-Monochloropropane-1,2-diol, 2-Monochloropane-1,3-diol (3-MPCD, 2-MPCD), glycidol and esters of these compounds.

The essence of the invention is a method of manufacturing refined oil, according to which the degummed oil produced by a previously known method in the process of pressing, extraction with a solvent, degumming of the crude oil obtained by means of phosphoric acid together with deacidification (neutralization) with sodium lye in order to remove phospholipids and free fatty acids, is , subjected successively to the process of bleaching with the use of the composition of bleaching earth, which result is a product with a minimum content of free fatty acids and reduced content of dyes, where the resulting oil from bleaching process is subject to dehydration process with the use of live water vapour at a pressure of 120 kPa under high vacuum and at a temperature below 185 °C to obtain the oil with a content of free and bound 2-MPCD and 3MPCD and glycidol - below the limit of quantification of currently used test methods - with the following parameters: FFA - not more than 0,15 mg KOH/g, water content not more than 0,1 %, red/yellow component not more than 1,5/15 on the 5,25" Lovibond scale, phosphorus content no higher than 5ppm, peroxide value no higher than 0,1 meq O2/kg, soap content no higher than 0,5 ppm, palatability not less than 3.

The method of producing refined edible oil according to the invention consists in hot pressing of the oil by a known method, followed by solvent extraction by a known method, followed by degumming and neutralization. At the end of the above mentioned process sequences, an oil with the following parameters is obtained:
- phosphorus content - not more than 5ppm.
- FFA (free fatty acids) content - not more than 0,15 mg KOH/g,
- water content - not more than 0,1 % m/m;
- red component - no more than 1,5 on the 5,25" Lovibond scale,
- yellow component - no more than 30 on the 5,25" Lovibond scale,
which is then bleached and filtered using bleaching earth with increased adsorption surface area, being a mixture of 80 to 98% w/w with hydrochloric acid activated bentonite with admixtures of quartz, mica, feldspar and calcite from 2 to 20% w/w of carbon activated by steam. The bleaching earth used in the method according to the invention has:
- min. adsorption surface 220 m²/g;
- bulk density from 250 to 750 kg/m3;
- acidity - from 0.4 to 0.6 mg KOH/g;
- humidity - max. 11 % (m/m);
- pH of an aqueous solution at temp. 20⁰C in the range from 4 to 6;
- melting point higher than 450⁰C;
- water solubility measured at 20⁰C of less than 0.9g/l;
- water content not more than 9,5 %;
- Dry sieve residue 63 µm - 25% +/- 2 and
- chlorine ion content 0,3 to 0,5 mg Cl/g.

During the research and numerous technological trials it turned out unexpectedly, that the bleaching earth used in the bleaching process allows to remove a significant part of the compounds contained in the oil, which affect the organoleptic properties. The use of bleaching earth with a strictly defined physico-chemical composition also makes it possible to achieve the value of red color component on the 5,25" Lovibond scale not greater than 1,5 the value of yellow color component on the 5,25" Lovibond scale not greater than 30.

Trials and studies have shown that the content of water and volatile compounds in the oil being the charge material in the bleaching process, amounting to more than 0.1% m/m, has a very negative effect on the bleaching process because it significantly deactivates the bleaching earth, while the value of dynamic viscosity from 7.24 to 7.28 mPas, preferably 7.26 mPas, increases the efficiency of bleaching eath adsorption, i.e. the value of adsorption of undesirable compounds contained in vegetable oil. Exceeding the water content above 0.1% m/m affects the process of oil hydrolysis, catalyzed by the presence of acidic bleaching earth, which in turn causes an undesirable increase in the content of free fatty acids (FFA).

The bleaching and filtration process is a continuous, multi-stage and fully automated process. Oil obtained after completion of neutralization process is directed to plate heat exchanger and preheated to temperature from 90 do 100⁰C, preferably 95°C, in order to drain unbound water from oil and reduce its viscosity. The heated oil is then directed to a two-section reactor. The oil in the upper part of the reactor is heated by indirect steam to the temperature from 102°C do 105⁰C in order to drain further unbound water from it and further reduce oil viscosity. The drying stage leads to a water content of no more than 0.1% m/m, in the period from 15 to 45 minutes, preferably 30 minutes and dynamic viscosity values from 7.24 to 7.28 mPas, preferably 7.26 mPas.

After completion of the drying stage, the proper bleaching process takes place. The oil is directed to the lower part of the reactor, where 1 to 2% by volume of the bleaching earth with activated carbon is added to the oil. In order to ensure the best possible contact between the oil and the bleaching earth, the mixing process is carried out with and in a nitrogen atmosphere. Nitrogen eliminates the contact of oil with oxygen and prevents oxidation reactions of oil components with unsaturated bonds. The bleaching process is carried out at temperatures from 90 to 120°C, preferably 100°C, at pressures from 8 to 13 kPa, preferably 8 kPa,, where vacuum is generated by a capacitor with a vacuum pump. During the process, its cyclic control is carried out with simultaneous verification of process parameters and the duration of the process depends on the speed at which the assumed parameters of the content of free fatty acids, water and red and yellow components are obtained.

Research and technical trials have shown that in order to achieve the assumed goal of the invention, the time of the proper bleaching process cannot exceed 60 minutes, because prolonging the time of oil contact with bleaching earth causes a significant deterioration of oil properties in the next stage of the method according to the invention, i.e. in the deodorization stage (removing taste and smell among others). This is manifested by the release of colour components to the oil, as well as the deterioration of organoleptic properties of the oil obtained after the deodorisation process. An important side effect of exceeding the bleaching process time is the taste of the obtained product (sensory evaluation) of soil and/or grass, which come from the bleaching earth remaining in the bleaching process for too long.

The stage of oil filtration with bleaching earth begins with the first plate filter filling. The mixture of oil, bleaching earth and activated carbon is circulated using a centrifugal pump located between the reactor and the filter.

During filtration, the pressure on the filter is gradually increased. The filtration process is conducted up to the pressure of no more than 200 kPa or no longer than 3 hours. Once the pressure or filtration time is reached, the oil/earth mixture is directed to a second filter connected in parallel with the first filter, with the same technical parameters, followed by the bleaching process as described above, while the first filter is prepared for reuse by draining the oil/bleaching earth. The filtration stage is conducted to the moment when clear oil is obtained and the bleaching earth is retained on the filter plates together with activated carbon (so called filter cake building). Clear oil is directed to the bleached oil tank. The resulting bleached oil has the following quality parameters:
- FFA content - not more than 0,15 mgKOH/g;
- water content not more than 0,1%;
- red component on the 5,25" Lovibond scale, not higher than 1.5;
- yellow component on the 5,25" Lovibond scale, not higher than 30;
- phosphorus content - not more than 5ppm.

The layer of oily bleaching earth retained on the filter plates together with activated carbon and adsorbed impurities (so called filter cake) is blown with dry steam at a pressure of 200 to 300 kPa for 20 to 45 minutes. Dry steam is produced from softened drinking water which has been subjected to an osmosis process. The condensed steam-oil mixture is collected separately as splash oil. and is guided out of the process. The filter cake is removed and the pressure in the filter is reduced to 90 to 110 kPa before it is removed. The cleaned, empty filter is prepared to accept the oil and bleach earth mixture again. Discarded bleching earth with up to 30% oil content is treated as process waste.

After the bleaching and filtration process, the oil is directed from the bleached oil tank to the deodorization process, which is the last stage of the process according to the invention. As we know, the conditions of deodorizing process are extremely important, such as temperature, pressure, amount of direct steam flowing in a unit of time, characteristics of steam, duration of the process. High temperature of the process leads to undesirable phenomena such as: isomerization, polymerization, decomposition. and removal of natural antioxidants, decomposition of caretonoids, formation of free and bound 2-MPCD, 3-MPCD and glycides. Therefore, the appropriate time of the process and the experimentally selected conditions of temperature and pressure limits the undesirable processes indicated above and the formation of free and bound 2-MPCD, 3-MPCD and glycides.

The purpose of the deodorisation process is, among other things, to remove substances that are carriers of unwanted odour and taste, which are natural components of crude oils.

In the first stage of the deodorization process, the oil is pumped to a plate economizer (exchanger), where it is heated to a temperature of 90 to 100°C with oil leaving the deodorization column. The heated oil is pumped to the next plate heat exchanger supplied with steam at a pressure of 300 kPa. Oil is heated to the temperature from 120 to 125°C, preferably to 120⁰C, and then directed to the dehydrator (tank with spray nozzle), in which it is sprayed. Water is removed from the oil in the dehydrator at a pressure of 2,7 to 4 kPa. The dried oil is directed to a surge chamber from which it is directed to a distillation column with a tube and jacket heater, where the process of vacuum distillation with the use of steam is carried out. The distillation process is carried out at the temperature from 180 - 185°C, preferably 180°C and pressure not higher than, 0,73 kPa. The temperature in the column is maintained by the circulation of vegetable oil between the column and the tube and jacket heater, supplied with diathermal oil with temperature from 220 to 250°C, preferably 236°C, while the vacuum is maintained by a system of steam jets.

The distillation column consists of two sections. The top section is constituted by the column with package filling, in which volatile oil components are distilled. There are 3 trays in the lower section from which the oil overflows gravitationally The two upper trays are equipped with mammoth pumps, supplied with dried, oxygen-free water vapour at the pressure of 1,2 MPa, reduced from 80 to 120 kPa . Oil flowing from the top tray down the column contacts the superheated steam in counterflow, which results in a process of heat and mass exchange, as a result of which light oil components, including acidic products, are carried away with water vapour upwards the column and discharged to an acidic vapour scrubber, while heavier oil components flow down the column. The fume scrubber is equipped with a package filling and works under the pressure lower by 0,3 kPa, than the pressure in the column. The pressure in the scrubber is generated by the same system of stream jets as the system of stream jets of the distillation column. Distilled acids and other volatile components are directed to the storage, and some of them are returned to the vapour scrubber, where they serve as a dew, while hot oil, devoid of low boiling components, is collected from the bottom of the distillation column and directed to cooling by means of a system of economizers and cooling exchangers, and then to the storage tanks.

The deodorization process takes between 60 and 80 minutes depending on the capacity, which means that the lower the efficiency of the process, the longer the process, while the conditions of conducting the process according to the invention provide a capacity of 5t./h

The oil obtained by the method according to the invention is characterised by the following quality parameters:
- phosphorus content - not more than 5ppm,
- FFA content - not more than 0,15 mg KOH/g,
- water content not more than 0,1 %,
- red/yellow component - no more than 1,5 / 15 on the 5,25" Lovibond scale,
- peroxide value of not more than 0,1 meq O2/kg,
- soap content - not more than 0,5 ppm,
- palatability not less than 3.

Numerous studies and technological trials have shown that conducing the deodorizing process with the use superheated water vapour under conditions of maximum process pressure reduction allows a lower process temperature to be used, thus eliminating secondary chemical reactions.

What is extremely important, the distillation process temperature allows for maximum limitation of triglyceride evaporation, allowing only lighter, undesirable oil components to evaporate. By conducting the deodorizing process by a method according to the invention, the content of each of undesirable: 3-Monochloropropane-1,2-diol, 2-Monochloropane-1,3-diol (3-MPCD, 2-MPCD) and their derivatives do not exceed 100 µg/kg and the glycidyl content is below the limit of determination (according to the method intended for such determinations).

Moreover, thanks to the application of the method according to the invention, oxidizers are decomposed and peroxides and steroidal hydrocarbons are removed from oil, which significantly improves the organoleptic properties of oil, such as taste, smell and color.

Generalizing:
- selection of bleaching earth and the initial stage of oil drying in appropriately selected process conditions, and
- appropriate time of the whitening process and experimentally selected temperature and pressure conditions, eliminating the formation of free and bound 2-MPCD, 3-MPCD and glycides, and
- conducting the deodorization process with the use of superheated steam under conditions of maximum reduction of the process pressure and the use of a lower process temperature, eliminating secondary chemical reactions and
- the temperature of the distillation process (deodorization process), made it possible to minimize the evaporation of triglycerides, allowing only the lighter, undesirable components of the oil to evaporate,
   these are the main elements of the method of the invention which have made it possible to obtain the content of each of the undesirable 3-Monochloropropane-1,2-diol, 2-Monochloropane-1,3-diol (3-MPCD, 2-MPCD) and their derivatives - in an amount not more than 100 µg / kg, and the glycidyl content - below the limit of quantification (according to the method intended for such determination).

The subject matter of the invention is presented in the examples of execution:

### EXAMPLE 1

The oil obtained in the process of hot stamping, solvent extraction, degumming and neutralization has the quality parameters:
- phosphorus content - 15 ppm.
- FFA (free fatty acids) content - not more than 0,09 mg KOH/g,
- water content - 0,08 %;
10000 kg of degummed and neutralised oil preheated in a plate heat exchanger to 95°C was delivered to the upper part of the bleaching reactor in a flow of 10000 kg/h. After preliminary drying in the upper part of the reactor (up to a water content of 0.05% m/m), the oil flows to the lower part, where during continuous oil circulation 120 kg of activated mixture of bleaching earth and activated carbon was added to the stream. The process was carried out by mixing nitrogen under the pressure of 3,3 kPa at 102°C. The vacuum was generated by means of a capacitor with a vacuum pump. During the process, process parameters were controlled for 45 minutes until the content of red and yellow components (1.5 R and 28 Y) was obtained.

The reaction mixture was subjected to the filtration process on plate filters until the maximum pressure of 200 kPa_in the system was reached, which took place after 2 hours.

The filter cake retained on the filter plates was blown out for 30 minutes with dry steam at a pressure of 300 kPa, which had previously been made from softened drinking water subjected to the osmosis process. The condensed steam-oil mixture was collected and guided out of the process. Before removing the filter cake, the pressure on the filter was reduced to atmospheric pressure.

Bleached oil in the amount of 9964 kg with the obtained colours of red component 1.5 and yellow component 28, content of free fatty acids of 0.11% was guided to a buffer tank. Then the bleached oil was heated in the flow of 5000 kg/h to the temperature of 125°C and fed to the dehydrator at the pressure prevailing in the system at the level of 3,3 kPa . Then the oil was transferred to a distillation column with a tube and jacket preheater, where vacuum distillation with steam was carried out at 185°C and at the pressure of 0,7 kPa. The temperature in the column was maintained by circulation of vegetable oil between the column and the tube and jacket heater supplied with diathermal oil at the temperature of 236°C. Volatile oil components, which were drained from the acidic vapor scrubber working at the pressure 0,3 kPa lower than the pressure in the column, were distilled in the upper section of the distillation column. Heavier components flowed gravitationally to the lower section of the column. The two trays of the lower section of the column were supplied with dried, oxygen-free water vapour at the pressure of 100 kPa. Oil was collected from the bottom of the column and sent to cooling to 20⁰C, C and then to storage tanks.

As a result, 4997 kg of refined oil with the following quality parameters was obtained
- FFA - 0,06 mg KOH/g,
- water content 0.006 %,
- red/yellow component - no more than 0,8 / 12 on the 5,25" Lovibond scale,
- peroxide value of 0,02 meq O2/kg,
- soap content - 0,5 ppm,
- palatability 4
and 3 kg of a mixture of free fatty acids, sterols, oxidation products.

### EXAMPLE 2

The oil obtained in the process of hot stamping, solvent extraction, degumming and neutralization has the quality parameters:
- phosphorus content - 8 ppm.
- FFA (free fatty acids) content - not more than 0,05 mg KOH/g,
- water content - 0,05 %;
10000 kg of degummed and neutralised oil preheated in a plate heat exchanger to 98°C was delivered to the upper part of the bleaching reactor in a flow of 10000 kg/h. After preliminary drying in the upper part of the reactor (up to a water content of 0.05% m/m), the oil flows to the lower part, where during continuous oil circulation 150 kg of activated mixture of bleaching earth and activated carbon was added to the stream. The process was carried out by mixing nitrogen under the pressure of 7,3 kPa at 103°C. The vacuum was generated by means of a capacitor with a vacuum pump. During the process, process parameters were controlled for 45 minutes until the content of red and yellow components (1.3 R and 23 Y) was obtained.

The reaction mixture was subjected to the filtration process on plate filters until the maximum pressure of 220 kPa in the system was reached, which took place after 1 hours 40 min.

The filter cake retained on the filter plates was blown out for 40 minutes with dry steam at the pressure of 300 kPa, which had previously been made from softened drinking water subjected to the osmosis process. The condensed steam-oil mixture was collected and guided out of the process. Before removing the filter cake, the pressure on the filter was reduced to atmospheric pressure.

Bleached oil in the amount of 9955 kg with the obtained colours of red component 1.3 and yellow component 23, content of free fatty acids of 0.11% was guided to a buffer tank. Then the bleached oil was heated in the flow of 4000 kg/h to the temperature of 125°C and fed to the dehydrator at the pressure prevailing in the system at the level of 3,3 kPa. Then the oil was transferred to a distillation column with a tube and jacket preheater, where vacuum distillation with steam was carried out at 180°C and at the pressure of 0,5 kPa. The temperature in the column was maintained by circulation of vegetable oil between the column and the tube and jacket heater supplied with diathermal oil at the temperature of 233°C. Volatile oil components, which were drained from the acidic vapor scrubber working at the pressure 0,3 kPa lower than the pressure in the column, were distilled in the upper section of the distillation column. Heavier components flowed gravitationally to the lower section of the column. The two trays of the lower section of the column were supplied with dried, oxygen-free water vapour at the pressure of 100 kPa. Oil was collected from the bottom of the column and sent to cooling to 20⁰C, and then to storage tanks.

As a result, 4996 kg of refined oil with the following quality parameters was obtained
- FFA - 0,04 mg KOH/g,
- water content 0.003 %,
- red/yellow component - no more than 0,6 / 9,8 on the 5,25" Lovibond scale,
- peroxide value of 0,02 meq O2/kg,
- soap content - 0,5 ppm,
- palatability 4 +
and 4 kg of a mixture of free fatty acids, sterols, oxidation products.

## Claims

1. The method of production of refined edible oil with low content of undesirable 3- monochloropropane-1,2-diol, 2-monochloropane-1,3-diol and glycides using a pressing process, solvent extraction, deguming with phosphoric acid, neutralisation with sodium lye and bleaching with bleaching earth, filtration and deodorisation, **characterized in that** the oil has a phosphorus content not more than 5ppm, FFA content not more than 0,15 mg KOH/g, water content not more than 0,1 % m/m, red/yellow components not more than 1,5/30 on the 5,25"Lovibond scale, obtained by known methods of pressing, extraction, deguming and neutralisation, is then subject to bleaching and filtration process based on a sequence of:
- preliminary drying of oil by heating it to the temperature from 90 to 100°C for the time from 15 to 45 minutes,
- proper bleaching process with the addition of 1 to 2% by weight of bleaching earth with steam activated carbon, which is carried out at the temperature from 90 to 120°C, C, at the pressure from 8 to 13 kPa and no longer than 60 minutes, while bleaching earth with activated carbon has a min. adsorption surface of 220 m2/g, bulk density from 250 to 750 kg/m3, acidity from 0.4 to 0.6 mg KOH/g, water solubility measured at 20°C lower than 0.9g/l, water content no more than 9.5%, dry residue after 63 µm sieve- 25% +/- 2 and content of chlorine ions from 0.3 to 0.5 mg Cl/g,
- multi-stage filtration process in which each step is carried out under conditions of gradual increase of filter pressure for not more than 3 hours or until a pressure of not more than 200 kPa_is reached, with the filtration step being cyclically repeated until an oil with a FFA content not more than 0.15 mgKOH/g, water content not more than 0.1% by weigth, a phosphorus content not more than 5ppm and a red/yellow component on the 5,25" Lovibond scale not more than 1.5/30 is reached,
- removal of the layer of oily bleaching earth with activated carbon and adsorbed impurities retained on the filter plates after it has been blown out within 20 to 45 minutes with dry water vapour at a pressure of 200 to 300 kPa_and gradual reduction of pressure on the filter to atmospheric pressure, and then the deodorizing process that consists of a sequence of:
- oil preheating to the temperature from 90 to 100°C
- subsequent heating of the oil to the temperature from 120 to 125°C with the use of water vapour at a pressure of 300 kPa.
- drying the oil by spraying it at a pressure of 2.7-4 kPa (20 to 30mmHg)
- vacuum oil distillation at temperatures from 180-185⁰C, at a pressure not exceeding 0,73 kPa.

2. The method according to claim 1 **characterized in that** the oil it is heated to the temperature of 95°C during preliminary drying process.

3. The method according to claim 1 or 2 **characterized in that** the oil is heated by indirect steam in the process of preliminary drying.

4. The method according to any of the above mentioned claims from 1 to 3 **characterized in that** the preliminary drying process is carried out within 30 minutes.

5. The method according to any of the above claims 1 to 4 **characterized in that** the fact that the bleaching earth with steam activated carbon is added volumetrically in the proper bleaching process and the mixing process is carried out with nitrogen.

6. The method according to any of the above claims 1 to 5 **characterized in that** the bleaching process is carried out at a temperature of 100°C.

7. The method according to any of the above claims 1 to 6 **characterized in that** the bleaching process is carried out at a pressure of 8 kPa.

8. The method according to any of the above claims 1 to 7 **characterized in that** the distillation process is carried out at the temperature of 185°C.

9. The method according to any of the above claims 1 to 8 **characterized in that** the deodorizing process is carried out in the range of 60 to 80 min.

10. The method according to any of the above claims 1 to 9 **characterized in that** the vacuum distillation of the oil is carried out in a distillation column consisting of two sections and a vapour scrubber, of which the top section is a column with packet filling, while the lower section consists of 3 trays, of which the upper two are supplied with dried, oxygen-free water vapour at a pressure of 1,2 MPa, reduced during the distillation process to a value from 80 to 120 kPa, while the vapour scrubber equipped with packet filling works under pressure lower by 0,3 kPa than the pressure in the column.

11. The method according to any of the above claims 1 to 10 **characterized in that**, the temperature in the distillation column is maintained by circulation of oil between the column and the tube-and-jacket heater supplied with diathermical oil of the temperature from 220 to 250°C, preferably 236°C.

12. The method according to any of the above claims 1 to 11 **characterized in that** the vacuum in the distillation column is maintained by the steam jet system.

13. The method according to any of the above claims 1 to 12 **characterized in that** the finished product has the following quality parameters: phosphorus content no higher than 5ppm, FFA - no more than 0.1mg KOH/g, water content no higher than 0.1%, red/yellow component no higher than 1.5/15 on the 5.25" Lovibond scale, peroxide value no higher than 0.1meq O2/kg, soap content no higher than 0.5ppm, palatability not less than 3.

## Patentansprüche

1. Verfahren zur Herstellung von raffiniertem Speiseöl mit geringem Gehalt an unerwünschten Verbindungen 3-Monochlorpropan-1,2-diol, 2-Monochlorpropan-1,3-diol und Glycidyl-Fettsäureestern unter Verwendung eines Pressverfahrens, einer Lösungsmittelextraktion, einer Entschleimung mit Phosphorsäure, einer Neutralisation mit Natronlauge und einer Bleichung mit Bleicherde, einer Filtration und einer Desodorierung, **dadurch gekennzeichnet, dass** das Öl einen Phosphorgehalt von nicht mehr als 5 ppm, einen Gehalt an freien Fettsäuren (FFA) von nicht mehr als 0,15 mg KOH/g, einen Wassergehalt von nicht mehr als 0,1 % m/m und eine Rot-/Gelbkomponente von nicht mehr als 1,5/30 auf der 5,25-Zoll-Lovibond-Skala aufweist, das durch bekannte Verfahren des Pressens, Extrahierens, Entschleimens und Neutralisierens gewonnen wird, und anschließend einem Bleich- und Filtrationsverfahren unterzogen wird, das auf einer Abfolge der folgenden Schritte basiert:
- vorläufige Trocknung des Öls durch Erhitzen auf eine Temperatur von 90 bis 100 °C für eine Dauer von 15 bis 45 Minuten,
- eigentlicher Bleichprozess unter Zugabe von 1 bis 2 Gew.-% Bleicherde mit dampfaktivierter Aktivkohle, der bei einer Temperatur von 90 bis 120 °C, einem Druck von 8 bis 13 kPa und einer Dauer von nicht mehr als 60 Minuten durchgeführt wird, wobei die Bleicherde mit dampfaktivierter Aktivkohle eine minimale Adsorptionsfläche von 220 m²/g, eine Schüttdichte von 250 bis 750 kg/m³, einen Säuregehalt von 0,4 bis 0,6 mg KOH/g, eine bei 20 °C gemessene Wasserlöslichkeit von weniger als 0,9 g/L, einen Wassergehalt von nicht mehr als 9,5 %, einen Trockenrückstand nach 63-µm-Siebung von 25 % ± 2 und einen Gehalt an Chlorionen von 0,3 bis 0,5 mg Cl/g aufweist,
- mehrstufiger Filtrationsprozess, bei dem jeder Schritt unter Bedingungen einer allmählichen Erhöhung des Filterdrucks für nicht mehr als 3 Stunden oder bis zu einem Druck von nicht mehr als 200 kPa durchgeführt wird, wobei der Filtrationsschritt zyklisch wiederholt wird, bis ein Öl mit einem FFA-Gehalt von nicht mehr als 0,15 mg KOH/g, einem Wassergehalt von nicht mehr als 0,1 Gew.-%, einem Phosphorgehalt von nicht mehr als 5 ppm und einer Rot-/Gelbkomponente auf der 5,25-Zoll-Lovibond-Skala von nicht mehr als 1,5/30 erreicht wird,
- Entfernung der Schicht aus öliger Bleicherde mit Aktivkohle und adsorbierten Verunreinigungen, die auf den Filterplatten zurückgehalten werden, nachdem sie innerhalb von 20 bis 45 Minuten mit trockenem Wasserdampf bei einem Druck von 200 bis 300 kPa ausgeblasen wurden, und allmähliche Verringerung des Drucks auf dem Filter auf Atmosphärendruck, und anschließend der Desodorierungsprozess, der aus einer Abfolge von folgenden Schritten besteht:
- Vorwärmen des Öls auf eine Temperatur von 90 bis 100 °C,
- Anschließendes Erhitzen des Öls auf eine Temperatur von 120 bis 125 °C unter Verwendung von Wasserdampf bei einem Druck von 300 kPa,
- Trocknen des Öls durch Versprühen mit einem Druck von 2,7 bis 4 kPa (20 bis 30 mmHg),
- Vakuumdestillation des Öls bei Temperaturen von 180 bis 185 °C bei einem Druck von nicht mehr als 0,73 kPa.

2. Verfahren nach Anspruch 1, **dadurch gekennzeichnet, dass** das Öl während des Vortrocknungsprozesses auf eine Temperatur von 95 °C erhitzt wird.

3. Verfahren nach Anspruch 1 oder 2, **dadurch gekennzeichnet, dass** das Öl während des Vortrocknungsprozesses durch indirekten Dampf erhitzt wird.

4. Verfahren nach einem der oben genannten Ansprüche 1 bis 3, **dadurch gekennzeichnet, dass** der Vortrocknungsprozess innerhalb von 30 Minuten durchgeführt wird.

5. Verfahren nach einem der oben genannten Ansprüche 1 bis 4, **dadurch gekennzeichnet, dass** die Bleicherde mit dampfaktivierter Aktivkohle volumetrisch im eigentlichen Bleichprozess zugegeben wird und der Mischprozess mit Stickstoff durchgeführt wird.

6. Verfahren nach einem der oben genannten Ansprüche 1 bis 5, **dadurch gekennzeichnet, dass** der Bleichprozess bei einer Temperatur von 100 °C durchgeführt wird.

7. Verfahren nach einem der vorstehenden Ansprüche 1 bis 6, **dadurch gekennzeichnet, dass** der Bleichprozess bei einem Druck von 8 kPa durchgeführt wird.

8. Verfahren nach einem der vorstehenden Ansprüche 1 bis 7, **dadurch gekennzeichnet, dass** der Destillationsprozess bei einer Temperatur von 185 °C durchgeführt wird.

9. Verfahren nach einem der vorstehenden Ansprüche 1 bis 8, **dadurch gekennzeichnet, dass** der Desodorierungsprozess im Bereich von 60 bis 80 Minuten durchgeführt wird.

10. Verfahren nach einem der vorstehenden Ansprüche 1 bis 9, **dadurch gekennzeichnet, dass** die Vakuumdestillation des Öls in einer Destillationskolonne durchgeführt wird, die aus zwei Abschnitten und einem Dampfwäscher besteht, wobei der obere Abschnitt eine Kolonne mit Packungsfüllung ist, während der untere Abschnitt aus drei Böden besteht, von denen die beiden oberen mit getrocknetem, sauerstofffreiem Wasserdampf bei einem Druck von 1,2 MPa versorgt werden, der während des Destillationsprozesses auf einen Wert von 80 bis 120 kPa reduziert wird, während der mit einer Packungsfüllung ausgestattete Dampfwäscher unter einem Druck arbeitet, der um 0,3 kPa niedriger ist als der Druck in der Kolonne.

11. Verfahren nach einem der vorstehenden Ansprüche 1 bis 10, **dadurch gekennzeichnet, dass** die Temperatur in der Destillationskolonne durch Zirkulation von Öl zwischen der Kolonne und dem Rohrmantelheizgerät aufrechterhalten wird, das mit diathermischem Öl mit einer Temperatur von 220 bis 250 °C, vorzugsweise 236 °C, versorgt wird.

12. Verfahren nach einem der vorstehenden Ansprüche 1 bis 11, **dadurch gekennzeichnet, dass** das Vakuum in der Destillationskolonne durch das Dampfstrahlsystem aufrechterhalten wird.

13. Verfahren nach einem der vorstehenden Ansprüche 1 bis 12, **dadurch gekennzeichnet, dass** das Endprodukt die folgenden Qualitätsparameter aufweist: Phosphorgehalt nicht höher als 5 ppm, FFA-Gehalt nicht mehr als 0,1 mg KOH/g, Wassergehalt nicht höher als 0,1 %, Rot-/Gelbkomponente nicht höher als 1,5/15 auf der 5,25-Zoll-Lovibond-Skala, Peroxidzahl nicht höher als 0,1 meq O2/kg, Seifengehalt nicht höher als 0,5 ppm, Schmackhaftigkeit mindestens 3.

## Revendications

1. Procédé de production d'une huile alimentaire raffinée à faible teneur en composés indésirables 3-monochloropropane-1,2-diol, 2-monochloropropane-1,3-diol et d'esters glycidyliques d'acides gras, utilisant un procédé de pressage, d'extraction par solvant, de dégommage à l'acide phosphorique, de neutralisation à la soude caustique, de blanchiment à la terre décolorante, de filtration et de désodorisation, **caractérisé en ce que** l'huile a une teneur en phosphore ne dépassant pas 5 ppm, une teneur en acides gras libres (AGL) inférieure ou égale à 0,15 mg KOH/g, une teneur en eau inférieure ou égale à 0,1 % m/m, une composante rouge/jaune inférieure ou égale à 1,5/30 sur l'échelle Lovibond de 5,25 pouces, obtenue par des procédés connus de pressage, d'extraction, de dégommage et de neutralisation, est ensuite soumise à un procédé de blanchiment et de filtration basé sur une séquence de :
- séchage préliminaire de l'huile par chauffage à une température comprise entre 90 et 100 °C pendant une durée de 15 à 45 minutes,
- blanchiment proprement dit avec ajout de 1 à 2 % en poids de terre décolorante contenant du charbon actif activé à la vapeur, effectué à une température comprise entre 90 et 120 °C, à une pression comprise entre 8 et 13 kPa et pendant une durée maximale de 60 minutes, la terre décolorante contenant du charbon actif présentant : une surface d'adsorption minimale de 220 m²/g, une densité apparente comprise entre 250 et 750 kg/m³, une acidité comprise entre 0,4 et 0,6 mg KOH/g, une solubilité dans l'eau, mesurée à 20 °C, inférieure à 0,9 g/L, une teneur en eau ne dépassant pas 9,5 %, un résidu sec après tamisage à 63 µm de 25 % ± 2 et une teneur en ions chlorure comprise entre 0,3 et 0,5 mg Cl/g,
- procédé de filtration en plusieurs étapes, dans lequel chaque étape est réalisée dans des conditions d'augmentation progressive de la pression du filtre pendant 3 heures maximum ou jusqu'à ce qu'une pression maximale de 200 kPa soit atteinte, l'étape de filtration étant répétée de manière cyclique jusqu'à obtention d'une huile dont la teneur en AGL ne dépasse pas 0,15 mg KOH/g, la teneur en eau ne dépasse pas 0,1 % en poids, la teneur en phosphore ne dépasse pas 5 ppm et la composante rouge/jaune sur l'échelle Lovibond de 5,25 pouces ne dépasse pas 1,5/30,
- élimination de la couche de terre décolorante huileuse contenant du charbon actif et des impuretés adsorbées, retenue sur les plaques filtrantes, après soufflage pendant 20 à 45 minutes avec de la vapeur d'eau sèche à une pression de 200 à 300 kPa et réduction progressive de la pression sur le filtre jusqu'à la pression atmosphérique, puis un procédé de désodorisation consistant en une séquence de :
- préchauffage de l'huile à une température comprise entre 90 et 100 °C,
- chauffage ultérieur de l'huile à une température comprise entre 120 et 125 °C à l'aide de vapeur d'eau à une pression de 300 kPa,
- séchage de l'huile par pulvérisation à une pression de 2,7 à 4 kPa (20 à 30 mmHg),
- distillation sous vide de l'huile à des températures comprises entre 180 et 185 °C, à une pression ne dépassant pas 0,73 kPa.

2. Procédé selon la revendication 1, **caractérisé en ce que** l'huile est chauffée à une température de 95 °C pendant le procédé de séchage préliminaire.

3. Procédé selon la revendication 1 ou 2, **caractérisé en ce que** l'huile est chauffée par de la vapeur indirecte au cours du procédé de séchage préliminaire.

4. Procédé selon l'une quelconque des revendications 1 à 3 susmentionnées, **caractérisé en ce que** le procédé de séchage préliminaire est effectué pendant au plus 30 minutes.

5. Procédé selon l'une quelconque des revendications 1 à 4 ci-dessus, **caractérisé en ce que** la terre décolorante contenant du charbon actif activé à la vapeur est ajoutée volumétriquement lors du blanchiment proprement dit et que le mélange est effectué avec de l'azote.

6. Procédé selon l'une quelconque des revendications 1 à 5 ci-dessus, **caractérisé en ce que** le procédé de blanchiment est effectué à une température de 100 °C.

7. Procédé selon l'une quelconque des revendications 1 à 6 ci-dessus, **caractérisé en ce que** le procédé de blanchiment est effectué à une pression de 8 kPa.

8. Procédé selon l'une quelconque des revendications 1 à 7 ci-dessus, **caractérisé en ce que** le procédé de distillation est effectué à une température de 185 °C.

9. Procédé selon l'une quelconque des revendications 1 à 8 ci-dessus, **caractérisé en ce que** le procédé de désodorisation est effectué pendant 60 à 80 minutes.

10. Procédé selon l'une quelconque des revendications 1 à 9 ci-dessus, **caractérisé en ce que** la distillation sous vide de l'huile est effectuée dans une colonne de distillation composée de deux sections et d'un laveur de vapeurs, dont la section supérieure est une colonne à garnissage, tandis que la section inférieure est composée de trois plateaux, dont les deux supérieurs sont alimentés en vapeur d'eau séchée et exempte d'oxygène à une pression de 1,2 MPa, réduite pendant la distillation à une valeur comprise entre 80 et 120 kPa, le laveur de vapeurs, équipé d'un garnissage, fonctionnant sous une pression inférieure de 0,3 kPa à la pression dans la colonne.

11. Procédé selon l'une quelconque des revendications 1 à 10 ci-dessus, **caractérisé en ce que** la température dans la colonne de distillation est maintenue par circulation d'huile entre la colonne et le réchauffeur à tube chemisé alimenté en huile thermique à une température comprise entre 220 et 250 °C, de préférence 236 °C.

12. Procédé selon l'une quelconque des revendications 1 à 11 ci-dessus, **caractérisé en ce que** le vide dans la colonne de distillation est maintenu par le système à jet de vapeur.

13. Procédé selon l'une quelconque des revendications 1 à 12 ci-dessus, **caractérisé en ce que** le produit fini présente les paramètres de qualité suivants : teneur en phosphore ne dépassant pas 5 ppm, teneur en AGL ne dépassant pas 0,1 mg KOH/g, teneur en eau ne dépassant pas 0,1 %, composante rouge/jaune ne dépassant pas 1,5/15 sur l'échelle Lovibond de 5,25 pouces, indice de peroxyde ne dépassant pas 0,1 meq O2/kg, teneur en savon ne dépassant pas 0,5 ppm, palatabilité d'au moins 3.
